# EUROPÄISCHE PATENTSCHRIFT

(11) **EP 4 104 225 B1**
(45) Veröffentlichungstag und Bekanntmachung des Hinweises auf die Patenterteilung: **28.01.2026**
(21) Anmeldenummer: 21705132.5
(22) Anmeldetag: 09.02.2021
(51) Int. Cl.: H01M 8/0273, H01M 8/0276, H01M 8/0286, H01M 8/0254

(54) **ELEKTROCHEMISCHE VORRICHTUNG UND VERFAHREN ZUR HERSTELLUNG EINER ELEKTROCHEMISCHEN VORRICHTUNG**
ELECTROCHEMICAL DEVICE AND METHOD FOR PRODUCING AN ELECTROCHEMICAL DEVICE
DISPOSITIF ÉLECTROCHIMIQUE ET PROCÉDÉ DE PRODUCTION DE DISPOSITIF ÉLECTROCHIMIQUE

(30) Priorität: 12.02.2020 DE 102020103624
(43) Veröffentlichungstag der Anmeldung: 21.12.2022
(73) Patentinhaber: EKPO Fuel Cell Technologies GmbH, 72581 Dettingen/Erms (DE)
(72) Erfinder: STAHL, Peter, 72555 Metzingen (DE); KRAFT, Jürgen, 72555 Metzingen (DE); MORCOS, Manuel, 72076 Tübingen (DE); GÖTZ, Michael, 72581 Dettingen/Erms (DE)
(74) Vertreter: Hoeger, Stellrecht & Partner Patentanwälte mbB
(86) Internationale Anmeldenummer: PCT/EP2021/053105
(87) Internationale Veröffentlichungsnummer: WO 2021/160620

(56) Entgegenhaltungen:
- EP-A1- 1 633 011
- EP-A1- 1 633 011
- CN-A- 104 538 654
- CN-A- 104 538 654
- CN-A- 108 054 407
- CN-A- 108 054 407
- DE-A1- 102006 032 530
- DE-A1- 102006 032 530
- US-A1- 2012 237 847
- US-A1- 2012 237 847

## Beschreibung

Die vorliegende Erfindung betrifft eine elektrochemische Vorrichtung, die mehrere elektrochemische Einheiten, welche längs einer Stapelrichtung aufeinanderfolgen, umfasst, wobei jede elektrochemische Einheit eine Bipolarplatte und eine elektrisch isolierende Dichtung umfasst, und wobei die elektrochemische Vorrichtung eine Spannvorrichtung zum Verpressen der elektrochemischen Einheiten längs der Stapelrichtung umfasst.

Bei bekannten elektrochemischen Vorrichtungen dieser Art besteht an der Außenfläche des aus den elektrochemischen Einheiten gebildeten Stapels und/oder an den Begrenzungsflächen von Medium-Kanälen, durch welche die für den Betrieb der elektrochemischen Vorrichtung erforderlichen fluiden Medien den elektrochemischen Einheiten zugeführt werden, eine erhöhte Gefahr von elektrischen Kurzschlüssen zwischen den Bipolarplatten der in der Stapelrichtung aufeinanderfolgenden elektrochemischen Einheiten, weil die äußeren und inneren Randbereiche der Bipolarplatten frei zugänglich sind. Ein solcher elektrischer Kurzschluss kann beispielsweise durch Einlagerungen von Schmutz oder anderen Fremdpartikeln und/oder durch verunreinigtes, insbesondere nicht deionisiertes, Wasser verursacht werden.

Die zusätzliche Anbringung von elektrisch isolierenden Schichten in den äußeren und inneren Randbereichen der Bipolarplatten erfordert einen hohen Aufwand im Herstellungsprozess und kann zu Restriktionen im Prozessablauf, insbesondere bei den Fertigungsprozessen der einzelnen Bestandteile der elektrochemischen Vorrichtung, führen, ganz besonders dann, wenn die Außenkonturen und/oder die Innenkonturen der Bipolarplatten aus mehr als einer Lage gebildet werden.

Die CN 104 538 654 A und die US 2012/237847 A1 offenbaren elektrochemische Vorrichtungen, die mehrere elektrochemische Einheiten umfassen, welche längs einer Stapelrichtung aufeinander folgen, wobei jede elektrochemische Einheit eine Bipolarplatte und eine elektrisch isolierende Dichtung umfasst, und eine Spannvorrichtung zum Verpressen der elektrochemischen Einheiten längs der Stapelrichtung umfassen,
wobei jeweils mindestens eine Dichtung mindestens einer elektrochemischen Einheit im verpressten Zustand in einer senkrecht zur Stapelrichtung gerichteten Überstandsrichtung seitlich über eine Kontur der Bipolarplatte der elektrochemischen Einheit übersteht.

Die CN 108 054 407 A offenbart eine elektrochemische Vorrichtung gemäß dem Oberbegriff von Anspruch 1.

Die EP 1 633 011 A1 offenbart eine elektrochemische Vorrichtung, die mehrere elektrochemische Einheiten umfasst, welche längs einer Stapelrichtung aufeinander folgen, wobei jede elektrochemische Einheit zwei Separatorplatten und eine elektrisch isolierende Dichtung umfasst, und eine Spannvorrichtung zum Verpressen der elektrochemischen Einheiten längs der Stapelrichtung umfasst,
wobei alle Dichtungen der elektrochemischen Einheiten im verpressten Zustand in einer senkrecht zur Stapelrichtung gerichteten Überstandsrichtung seitlich über eine Kontur der jeweils zugeordneten Separatorplatte überstehen.

Der vorliegenden Erfindung liegt die Aufgabe zugrunde, eine elektrochemische Vorrichtung der eingangs genannten Art zu schaffen, bei welcher das Risiko eines Kurzschlusses zwischen einander benachbarten Bipolarplatten reduziert ist, ohne dass der Aufwand für die Herstellung der elektrochemischen Vorrichtung übermäßig erhöht wird.

Diese Aufgabe wird durch eine elektrochemische Vorrichtung nach Anspruch 1 gelöst.

Der vorliegenden Erfindung liegt somit das Konzept zugrunde, die ohnehin zur Trennung der verschiedenen Medienräume der elektrochemischen Vorrichtung voneinander und/oder von der Umgebung der elektrochemischen Vorrichtung erforderlichen Dichtungen zusätzlich dazu zu nutzen, die Bipolarplatten an ihren Außenkonturen gegenüber der Umgebung der elektrochemischen Vorrichtung und/oder an ihren Innenkonturen gegenüber den die elektrochemische Vorrichtung durchsetzenden Medium-Kanälen zumindest teilweise abzuschirmen, um so zu verhindern, dass elektrisch leitende Elemente, beispielsweise Schmutz oder andere Fremdpartikel oder verunreinigtes, insbesondere nicht deionisiertes, Wasser, in den Bereich zwischen den Bipolarplatten gelangt und zu einem Kurzschluss zwischen einander benachbarten Bipolarplatten führt.

Die Kontur, über welche die mindestens eine Dichtung mindestens einer elektrochemischen Einheit im verpressten Zustand in einer senkrecht zur Stapelrichtung gerichteten Überstandsrichtung seitlich übersteht, kann eine Außenkontur oder eine Innenkontur der Bipolarplatte sein.

Die Dichtung kann über einen Teil des Umfangs der betreffenden Kontur der Bipolarplatte hinweg oder über den gesamten Umfang der betreffenden Kontur der Bipolarplatte hinweg seitlich über die Kontur überstehen.

Bei einer besonderen Ausgestaltung der Erfindung ist vorgesehen, dass mindestens eine Dichtung mindestens einer elektrochemischen Einheit im verpressten Zustand über eine Außenkontur der Bipolarplatte der elektrochemischen Einheit in einen Außenraum der elektrochemischen Vorrichtung übersteht.

Alternativ oder ergänzend hierzu kann vorgesehen sein, dass mindestens eine Dichtung mindestens einer elektrochemischen Einheit im verpressten Zustand über eine Innenkontur der Bipolarplatte der elektrochemischen Einheit in einen Medium-Kanal der elektrochemischen Vorrichtung übersteht.

Besonders bevorzugt ist es, wenn mindestens eine Dichtung mindestens einer elektrochemischen Einheit im verpressten Zustand sowohl über eine Außenkontur der Bipolarplatte der elektrochemischen Einheit in einen Außenraum der elektrochemischen Vorrichtung übersteht als auch über eine Innenkontur der Bipolarplatte der elektrochemischen Einheit in mindestens einen Medium-Kanal der elektrochemischen Vorrichtung übersteht.

Vorzugsweise liegt mindestens eine Dichtung mindestens einer elektrochemischen Einheit im verpressten Zustand an einer Dichtung einer benachbarten elektrochemischen Einheit an.

Mindestens eine Außenkontur mindestens einer Bipolarplatte ist durch mindestens eine der Bipolarplatte benachbarte Dichtung, vorzugsweise im Wesentlichen vollständig und/oder vorzugsweise über im Wesentlichen den gesamten Umfang der Außenkontur der betreffenden Bipolarplatte hinweg, gegenüber einem Außenraum der elektrochemischen Vorrichtung abgeschirmt.

Ferner ist es günstig, wenn mindestens eine Innenkontur mindestens einer Bipolarplatte durch mindestens eine der Bipolarplatte benachbarte Dichtung, vorzugsweise im Wesentlichen vollständig und/oder vorzugsweise über im Wesentlichen den gesamten Umfang der betreffenden Innenkontur der jeweiligen Bipolarplatte hinweg, gegenüber einem Medium-Kanal der elektrochemischen Vorrichtung abgeschirmt ist.

Bei einer besonderen Ausgestaltung der Erfindung ist vorgesehen, dass die Dichtung im unverpressten Zustand, über einen Teil des Umfangs der betreffenden Kontur der jeweiligen Bipolarplatte hinweg oder über den gesamten Umfang der betreffenden Kontur der jeweiligen Bipolarplatte hinweg, nicht in einer senkrecht zur Stapelrichtung gerichteten Überstandsrichtung seitlich über die Kontur der Bipolarplatte übersteht.

Die Dichtung liegt mit mindestens einem Kontaktbereich an zwei einander benachbarten Bipolarplatten der elektrochemischen Vorrichtung an.

Bei einer besonderen Ausgestaltung der Erfindung ist vorgesehen, dass der Kontaktbereich im unverpressten Zustand bezüglich einer Längsebene der Dichtung, welche parallel zur Stapelrichtung und parallel zu einer Längsrichtung der Dichtung durch eine Kuppe des Kontaktbereichs verläuft, unsymmetrisch ausgebildet ist. Durch eine solche unsymmetrische Ausbildung des Kontaktbereichs kann die Tendenz des Kontaktbereichs, sich bei der Verpressung der elektrochemischen Einheiten der elektrochemischen Vorrichtung in Richtung auf die Außenkontur oder Innenkontur einer benachbarten Bipolarplatte hin und/oder über die Außenkontur oder Innenkontur der benachbarten Bipolarplatte hinweg zu bewegen, gefördert werden.

Die Dichtung kann einen Isolationsbereich umfassen, welcher im verpressten Zustand an einem Isolationsbereich einer weiteren Dichtung der elektrochemischen Vorrichtung anliegt.

Die Dichtung kann einen oder mehrere keilförmige Bereiche aufweisen.

Bei einer bevorzugten Ausgestaltung der Erfindung ist vorgesehen, dass die Außenflächen der Dichtungen der elektrochemischen Vorrichtung im verpressten Zustand eine geschlossene Außen-Dichtfläche an einer Außenseite der elektrochemischen Vorrichtung bilden.

Dabei kann insbesondere vorgesehen sein, dass die Außen-Dichtfläche die elektrochemische Vorrichtung längs deren gesamten Umfangs umgibt.

Ferner ist es günstig, wenn die Innenflächen der Dichtungen der elektrochemischen Vorrichtung im verpressten Zustand eine geschlossene Innen-Dichtfläche an einer an einen Medium-Kanal der elektrochemischen Vorrichtung angrenzenden Innenseite der elektrochemischen Vorrichtung bilden.

Besonders günstig ist es, wenn eine solche geschlossene Innen-Dichtfläche den betreffenden Medium-Kanal längs seines gesamten Umfangs umgibt.

Die vorliegende Erfindung betrifft ferner ein Verfahren zur Herstellung einer elektrochemischen Vorrichtung, welches Folgendes umfasst:
- Bildung eines Stapels, welcher mehrere längs einer Stapelrichtung aufeinanderfolgende elektrochemische Einheiten umfasst, wobei jede elektrochemische Einheit eine Bipolarplatte und eine elektrisch isolierende Dichtung umfasst; und
- Verspannen des Stapels aus elektrochemischen Einheiten mittels einer Spannvorrichtung.

Der vorliegenden Erfindung liegt die weitere Aufgabe zugrunde, ein Verfahren der vorstehend genannten Art zu schaffen, durch welches eine elektrochemische Vorrichtung hergestellt wird, bei welcher das Risiko eines Kurzschlusses zwischen einander in dem Stapel aus elektrochemischen Einheiten benachbarten Bipolarplatten reduziert ist, ohne dass der Aufwand zur Herstellung der elektrochemischen Vorrichtung übermäßig erhöht wird.

Diese Aufgabe wird durch ein Verfahren nach Anspruch 12 gelöst.

Dabei kann insbesondere vorgesehen sein, dass mindestens eine Dichtung mindestens einer elektrochemischen Einheit im unverpressten Zustand (noch) nicht in einer senkrecht zur Stapelrichtung gerichteten Überstandsrichtung seitlich über die betreffende Kontur der Bipolarplatte übersteht.

Das erfindungsgemäße Verfahren zur Herstellung einer elektrochemischen Vorrichtung eignet sich insbesondere zur Herstellung einer erfindungsgemäßen elektrochemischen Vorrichtung.

Besondere Ausgestaltungen des erfindungsgemäßen Verfahrens zur Herstellung einer elektrochemischen Vorrichtung sind vorstehend bereits im Zusammenhang mit besonderen Ausgestaltungen der erfindungsgemäßen elektrochemischen Vorrichtung erläutert worden.

Die erfindungsgemäße elektrochemische Vorrichtung kann insbesondere eine Brennstoffzellenvorrichtung, ein Elektrolyseur oder ein Batteriestapel sein.

Durch einen Medium-Kanal der elektrochemischen Vorrichtung kann ein für den Betrieb der elektrochemischen Vorrichtung erforderliches fluides Medium, beispielsweise ein Anodengas, ein Kathodengas oder ein Kühlmedium, den elektrochemischen Einheiten der elektrochemischen Vorrichtung zugeführt oder aus den elektrochemischen Einheiten der elektrochemischen Vorrichtung abgeführt werden.

Der Medium-Kanal erstreckt sich vorzugsweise im Wesentlichen parallel zu der Stapelrichtung der elektrochemischen Vorrichtung.

Erfindungsgemäß wird mindestens eine Dichtung so ausgebildet, dass sie nach dem Assemblieren des Stapels aus elektrochemischen Einheiten und nach dem Verspannen des Stapels längs der Stapelrichtung in einer senkrecht zur Stapelrichtung des Stapels ausgerichteten Überstandsrichtung über mindestens eine der Dichtung benachbarte Bipolarplatte seitlich übersteht.

Die Dichtungen der elektrochemischen Vorrichtung können insbesondere so ausgebildet sein, dass sie im verpressten Zustand der elektrochemischen Vorrichtung die Außenflächen des Stapels vollständig umschließen, so dass keine Bipolarplatten der elektrochemischen Vorrichtung mehr von dem Außenraum der elektrochemischen Vorrichtung aus sichtbar sind.

Der Überstand der Dichtung in der senkrecht zur Stapelrichtung ausgerichteten Überstandsrichtung seitlich über mindestens eine benachbarte Bipolarplatte hinaus kann bereits vor dem Verspannen des Stapels aus elektrochemischen Einheiten bestehen oder erst während des Verspannens des Stapels aus elektrochemischen Einheiten durch eine Bewegung zumindest eines Teils der Dichtung erzeugt werden.

Im verpressten Zustand der elektrochemischen Einheiten werden die Außenkonturen und/oder die Innenkonturen der Bipolarplatten zuverlässig voneinander und gegenüber äußeren Einflüssen isoliert, so dass Kurzschlüsse zwischen den Bipolarplatten konstruktiv ausgeschlossen werden.

Insbesondere wird verhindert, dass die Bipolarplatten an ihrem äußeren Umfang durch elektrisch leitende Fremdpartikel und/oder durch elektrisch leitendes, insbesondere nicht deionisiertes, Wasser kontaktiert werden, so dass das Entstehen von Kurzschlüssen vermieden wird.

Die durch die Dichtungen geschützten Konturen der Bipolarplatten können sich sowohl im Bereich der Außenflächen des Stapels aus elektrochemischen Einheiten als auch im Bereich von Innenflächen des Stapels aus elektrochemischen Einheiten, insbesondere im Bereich von einem Medium-Kanal der elektrochemischen Vorrichtung zugewandten Innenflächen des Stapels, befinden.

Wenn vorgesehen ist, dass sich die Dichtung während der Verpressung des Stapels aus elektrochemischen Einheiten längs der Stapelrichtung in einer Richtung senkrecht zu der Stapelrichtung bewegt, so dass der Überstand der Dichtung über eine benachbarte Bipolarplatte erst während der Verpressung des Stapels erreicht wird, so kann dies für das Assemblieren des Stapels aus elektrochemischen Einheiten von Vorteil sein, da es in diesem Fall möglich ist, die elektrochemischen Einheiten über die Außenkanten der Bipolarplatten beim Aufeinanderstapeln aneinander zu führen.

Die Dichtung jeder elektrochemischen Einheit der elektrochemischen Vorrichtung kann einteilig ausgebildet sein oder aus zwei oder mehr Dichtungsteilen bestehen.

Eine Bewegung der Dichtung senkrecht zur Stapelrichtung während der Verpressung des Stapels aus elektrochemischen Einheiten kann durch die geometrische Form der Dichtung oder durch die geometrische Form einer oder mehrerer der der Dichtung benachbarten Bipolarplatten erreicht werden.

Die Materialeigenschaften und/oder die Geometrie der Dichtung oder mindestens einer der der Dichtung benachbarten Bipolarplatten können so beeinflusst werden, dass die Reibungskoeffizienten zwischen der Dichtung und der mindestens einen benachbarten Bipolarplatte gezielt lokal reduziert oder erhöht werden, derart, dass die Bewegung der Dichtung während des Verpressens des Stapels aus elektrochemischen Einheiten senkrecht zur Stapelrichtung gefördert wird.

Dabei kann insbesondere vorgesehen sein, dass die Dichtung und/oder mindestens eine der der Dichtung benachbarten Bipolarplatten durch eine Plasmabehandlung, durch eine Behandlung mit einem Primer und/oder durch eine Behandlung mit einem Schmiermittel so behandelt werden, dass der Reibungskoeffizient zwischen der Dichtung und der mindestens einen benachbarten Bipolarplatte lokal verändert wird.

Alternativ oder ergänzend hierzu kann der Reibungskoeffizient zwischen der Dichtung und der mindestens einen benachbarten Bipolarplatte durch eine geometrische Strukturierung der Dichtung und/oder der betreffenden Bipolarplatte und/oder durch das gezielte Herstellen einer glatten Oberfläche an der Dichtung und/oder an der mindestens einen Bipolarplatte erreicht werden.

Die Dichtung ist aus einem Elastomermaterial gebildet.

Die Dichtung kann beispielsweise durch ein Spritzgießverfahren, durch ein Musterdruckverfahren, insbesondere ein Siebdruckverfahren, oder durch ein Raupenauftragsverfahren hergestellt sein.

Die Dichtung kann an eine benachbarte Bipolarplatte, an eine Gasdiffusionslage, an einen Bestandteil einer Membran-Elektroden-Anordnung der elektrochemischen Einheit und/oder an ein anderes Trägerelement angebunden sein.

Die Bipolarplatten können aus einem oder aus mehreren metallischen Materialien hergestellt sein.

Jede Bipolarplatte kann einlagig oder mehrlagig ausgebildet sein.

Die elektrochemischen Einheiten der elektrochemischen Vorrichtung umfassen vorzugsweise eine Polymer-Elektrolyt-Membran (PEM).

Besonders günstig ist es, wenn die Dichtungen der elektrochemischen Vorrichtung die Außenkonturen der Bipolarplatten der elektrochemischen Vorrichtung zumindest nach der Verpressung des Stapels aus elektrochemischen Einheiten so umschließen, dass ein elektrischer Isolationsschutz gewährleistet ist.

Die Dichtung kann als eine separate Komponente in die elektrochemische Einheit eingelegt werden oder stoffschlüssig mit der Bipolarplatte der elektrochemischen Einheit oder mit einem Bestandteil der Membran-Elektroden-Anordnung (MEA) oder mit einer porösen Gasdiffusionslage der elektrochemischen Einheit verbunden sein.

Weitere Vorteile und Merkmale der Erfindung sind Gegenstand der nachfolgenden Beschreibung und der zeichnerischen Darstellung von Ausführungsbeispielen.

In den Zeichnungen zeigen:

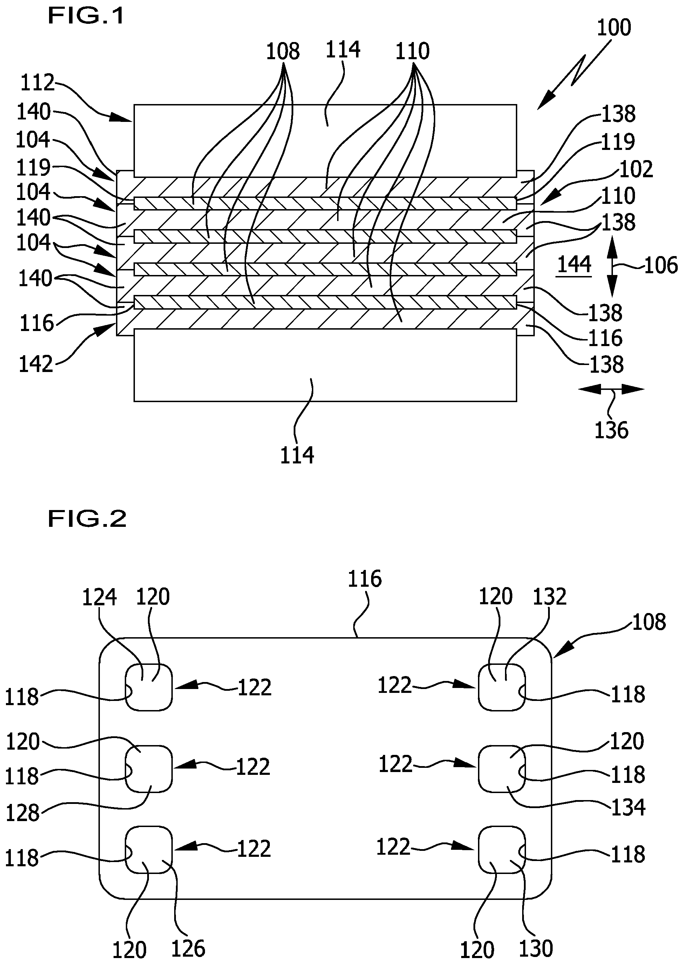

- Fig. 1: eine schematische Darstellung einer elektrochemischen Vorrichtung, die mehrere elektrochemische Einheiten, welche längs einer Stapelrichtung aufeinanderfolgen, und eine Spannvorrichtung zum Verpressen der elektrochemischen Einheiten längs der Stapelrichtung umfasst, wobei jede elektrochemische Einheit eine Bipolarplatte und eine elektrisch isolierende Dichtung umfasst und wobei die Dichtungen der elektrochemischen Einheiten im verpressten Zustand in einer senkrecht zur Stapelrichtung gerichteten Überstandsrichtung seitlich über eine Kontur der Bipolarplatten der elektrochemischen Einheiten überstehen;
- Fig. 2: eine schematische Draufsicht auf eine der Bipolarplatten der elektrochemischen Vorrichtung aus Fig. 1;

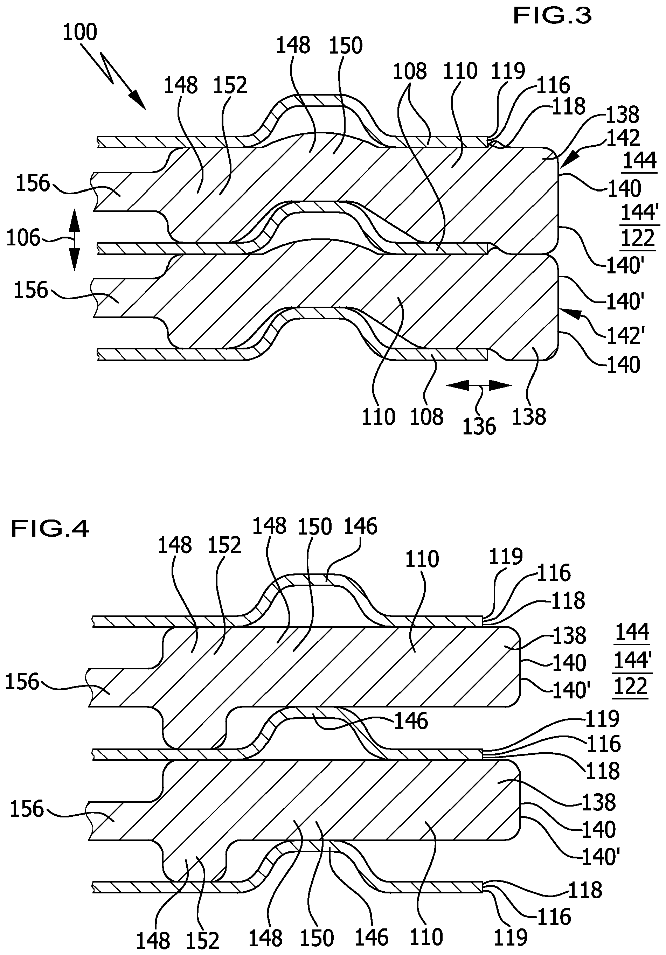

- Fig. 3: einen ausschnittsweisen Querschnitt durch die elektrochemische Vorrichtung aus Fig. 1 im Bereich einer Außenkontur oder einer Innenkontur der Bipolarplatten, in einem verpressten Zustand der Dichtungen nach dem Verspannen der elektrochemischen Einheiten mittels der Spannvorrichtung;
- Fig. 4: einen der Fig. 3 entsprechenden ausschnittsweisen Querschnitt durch die elektrochemische Vorrichtung aus Fig. 1 im Bereich einer Außenkontur oder einer Innenkontur der Bipolarplatten, in einem unverpressten Zustand der Dichtungen, vor dem Verpressen der elektrochemischen Einheiten mittels der Spannvorrichtung;

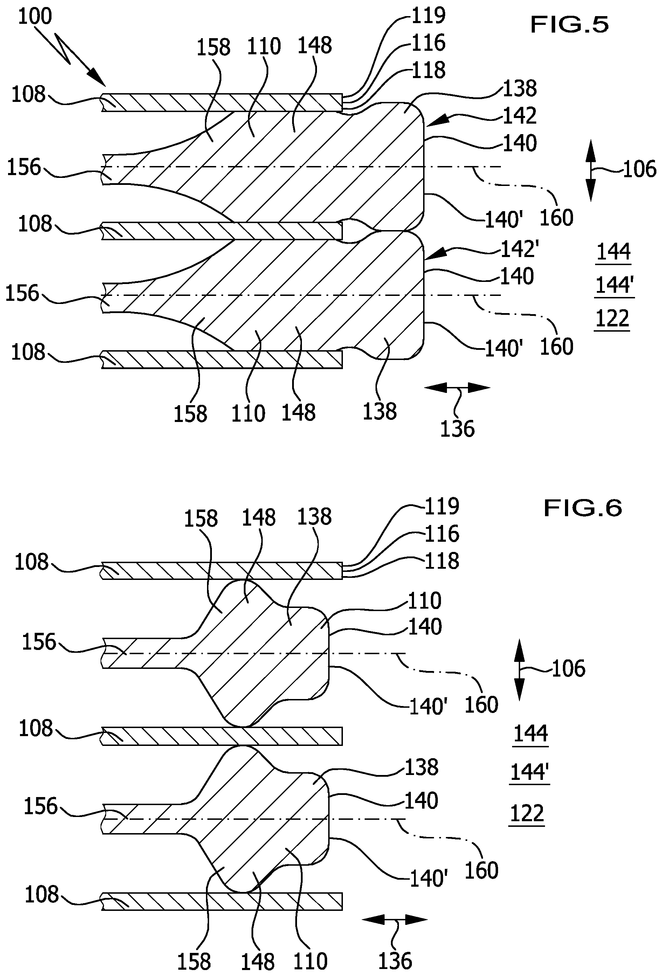

- Fig. 5: einen ausschnittsweisen Querschnitt durch eine zweite Ausführungsform der elektrochemischen Vorrichtung, bei welcher die Dichtungen einen keilförmigen Bereich umfassen, in einem verpressten Zustand der Dichtungen, nach dem Verpressen der elektrochemischen Einheiten mittels der Spannvorrichtung;
- Fig. 6: einen ausschnittsweisen Querschnitt durch eine dritte Ausführungsform der elektrochemischen Vorrichtung, bei welcher die Dichtungen im unverpressten Zustand nicht über eine Außenkontur oder eine Innenkontur der Bipolarplatten seitlich überstehen, in dem unverpressten Zustand der Dichtungen, vor dem Verpressen der elektrochemischen Einheiten mittels der Spannvorrichtung;

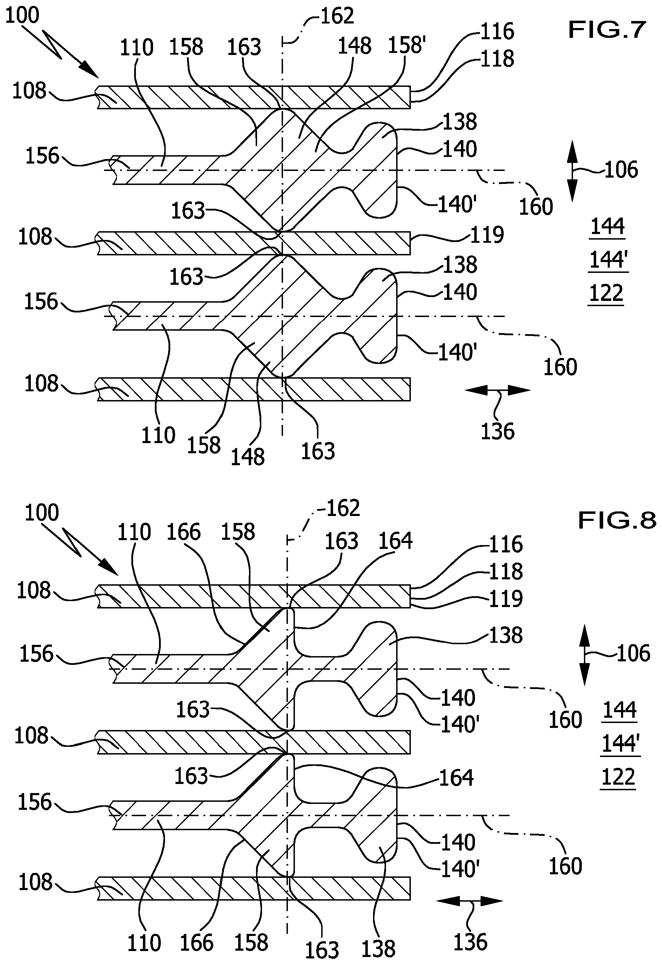

- Fig. 7: einen ausschnittsweisen Querschnitt durch eine vierte Ausführungsform der elektrochemischen Vorrichtung, bei welcher die Dichtungen jeweils einen keilförmigen Bereich, einen symmetrisch ausgebildeten Kontaktbereich und einen Isolationsbereich umfassen, in einem unverpressten Zustand der Dichtungen, vor dem Verpressen der elektrochemischen Einheiten mittels der Spannvorrichtung;
- Fig. 8: einen ausschnittsweisen Querschnitt durch eine fünfte Ausführungsform der elektrochemischen Vorrichtung, bei der die Dichtungen einen keilförmigen Bereich, einen unsymmetrischen Kontaktbereich und einen Isolationsbereich aufweisen, in einem unverpressten Zustand der Dichtungen, vor dem Verpressen der elektrochemischen Einheiten mittels der Spannvorrichtung;

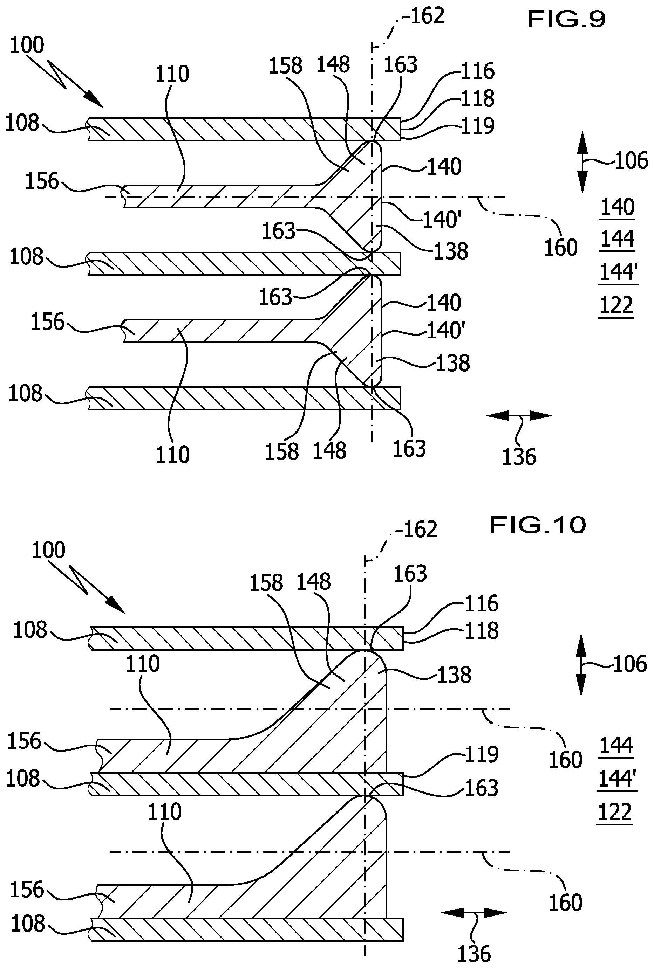

- Fig. 9: einen ausschnittsweisen Querschnitt durch eine sechste Ausführungsform der elektrochemischen Vorrichtung, bei der die Dichtungen einen keilförmigen Bereich aufweisen, in einem unverpressten Zustand der Dichtungen, vor dem Verpressen der elektrochemischen Einheiten mittels der Spannvorrichtung; und
- Fig. 10: einen ausschnittsweisen Querschnitt durch eine siebte Ausführungsform der elektrochemischen Vorrichtung, bei der die Dichtungen einen keilförmigen Bereich aufweisen und einen Kontaktbereich, welcher bezüglich einer parallel zur Stapelrichtung ausgerichteten Ebene unsymmetrisch ist, in einem unverpressten Zustand der Dichtungen, vor dem Verpressen der elektrochemischen Einheiten mittels der Spannvorrichtung.

Gleiche oder funktional äquivalente Elemente sind in allen Figuren mit denselben Bezugszeichen bezeichnet.

Eine in den Fig. 1 bis 4 dargestellte, als Ganzes mit 100 bezeichnete elektrochemische Vorrichtung ist beispielsweise als eine Brennstoffzellenvorrichtung oder als ein Elektrolyseur ausgebildet.

Die elektrochemische Vorrichtung 100 umfasst einen Stapel 102, welcher mehrere elektrochemische Einheiten 104 umfasst, die längs einer Stapelrichtung 106 aufeinander folgen.

Jede der elektrochemischen Einheiten 104 umfasst jeweils eine Bipolarplatte 108 und eine elektrisch isolierende Dichtung 110 sowie eine (nicht dargestellte) elektrochemisch aktive Einheit, in welcher eine elektrochemische Reaktion zwischen elektrochemisch reaktiven Spezies stattfindet, welche aus den der elektrochemischen Vorrichtung 100 zugeführten fluiden Reaktionsmedien, insbesondere einem Anodengas und einem Kathodengas, stammen.

In dem in Fig. 1 dargestellten verpressten Zustand sind die elektrochemischen Einheiten 104 der elektrochemischen Vorrichtung 100 längs der Stapelrichtung 106 mittels einer Spannvorrichtung 112 verspannt, welche Endplatten 114 umfasst, zwischen denen der Stapel 102 aus elektrochemischen Einheiten 104 angeordnet ist.

Die Endplatten 114 können in beliebiger Weise, beispielweise mittels Zugankern, gegeneinander verspannt sein.

Jede der Bipolarplatten 108 weist, wie am besten aus Fig. 2 zu ersehen ist, eine Außenkontur 116 und mehrere Innenkonturen 118 auf, welche jeweils eine Medium-Durchtrittsöffnung 120 der Bipolarplatte 108 umgeben.

Jede der Medium-Durchtrittsöffnungen 120 bildet einen Bestandteil eines jeweils zugeordneten Medium-Kanals 122, welcher den Stapel 102 von elektrochemischen Einheiten 104 parallel zu der Stapelrichtung 106 durchsetzt.

Die Medium-Kanäle 122 dienen der Zufuhr von fluiden Medien zu den elektrochemischen Einheiten 104 oder der Abfuhr von fluiden Medien aus den elektrochemischen Einheiten 104.

Insbesondere kann vorgesehen sein, dass jeweils einer der Medium-Kanäle 122 als ein Anodengas-Zuführkanal 124, als ein Kathodengas-Zuführkanal 126, als ein Kühlmedium-Zuführkanal 128, als ein Anodengas-Abführkanal 130, als ein Kathodengas-Abführkanal 132 beziehungsweise als ein Kühlmedium-Abführkanal 134 ausgebildet ist.

Jede Bipolarplatte 108 weist für jedes dieser fluiden Medien jeweils ein Strömungsfeld auf, durch welches das fluide Medium von dem jeweils zugeordneten Zuführkanal zu dem jeweils zugeordneten Abführkanal strömen kann, längs einer im Wesentlichen senkrecht zu der Stapelrichtung 106 gerichteten Strömungsrichtung.

Insbesondere kann die Bipolarplatte 108 ein Anodengas-Strömungsfeld aufweisen, durch welches das Anodengas von dem Anodengas-Zuführkanal 124 zu dem Anodengas-Abführkanal 130 strömen kann.

Ferner kann die Bipolarplatte 108 ein Kathodengas-Strömungsfeld aufweisen, durch welches das Kathodengas von dem Kathodengas-Zuführkanal 126 zu dem Kathodengas-Abführkanal 132 strömen kann.

Ferner kann die Bipolarplatte 108 ein Kühlmedium-Strömungsfeld aufweisen, durch welches das Kühlmedium von dem Kühlmedium-Zuführkanal 128 zu dem Kühlmedium-Abführkanal 134 strömen kann.

Wie am besten aus Fig. 1 zu ersehen ist, sind die Bipolarplatten 108 der elektrochemischen Einheiten 104 durch die jeweils zwischen zwei Bipolarplatten 108 angeordneten elektrisch isolierenden Dichtungen 110 elektrisch voneinander isoliert, so dass in der elektrochemischen Vorrichtung 100 kein Kurzschluss auftritt.

Im in Fig. 1 dargestellten verpressten Zustand der elektrochemischen Einheiten 104 stehen die Dichtungen 110 im verpressten Zustand in einer senkrecht zur Stapelrichtung 106 gerichteten Überstandsrichtung 136 seitlich über die Außenkontur 116 der Bipolarplatte 108 derselben elektrochemischen Einheit 104 über.

Grundsätzlich kann vorgesehen sein, dass die Dichtungen 110 jeweils nur über einen Teil ihres Umfangs über die Außenkontur 116 der jeweils zugeordneten Bipolarplatte 108 in der Überstandsrichtung 136 überstehen; vorzugsweise ist jedoch vorgesehen, dass die Dichtungen 110 über ihren gesamten Umfang hinweg und über den gesamten Umfang der Außenkontur 116 der jeweils zugeordneten Bipolarplatte 108 hinweg in der Überstandsrichtung 136 über die jeweils zugeordnete Bipolarplatte 108 überstehen.

Die Dichtungen 110 liegen mit über die jeweils zugeordnete Bipolarplatte 108 überstehenden Isolationsbereichen 138 an den in der Stapelrichtung 106 darüber und darunter liegenden Dichtungen 110 an, so dass die Außenflächen 140 der Dichtungen 110 zusammen eine geschlossene Außen-Dichtfläche 142 an der Außenseite der elektrochemischen Vorrichtung 100 bilden.

Durch diese geschlossene Außen-Dichtfläche 142 sind die Außenkonturen 116 der Bipolarplatten 108 der elektrochemischen Einheiten 104 vollständig gegenüber einem Außenraum 144 der elektrochemischen Vorrichtung 100 abgeschirmt, so dass keine leitfähigen Elemente, insbesondere kein Schmutz, keine Fremdpartikel und/oder kein verunreinigtes, beispielsweise nicht deionisiertes, Wasser, die Bipolarplatten 108 von dem Außenraum 144 der elektrochemischen Vorrichtung 100 her kontaktieren können.

Ein Kurzschluss zwischen zwei in der Stapelrichtung 106 aufeinander folgenden Bipolarplatten 108 aufgrund einer Verunreinigung durch solche elektrisch leitfähigen Elemente aus dem Außenraum 144 der elektrochemischen Vorrichtung 100 ist dadurch ausgeschlossen.

Ferner kann vorgesehen sein, dass im in Fig. 1 dargestellten verpressten Zustand der elektrochemischen Einheiten 104 die Dichtungen 110 in der senkrecht zur Stapelrichtung 106 gerichteten Überstandsrichtung 136 seitlich über mindestens eine der Innenkonturen 118, welche jeweils eine Medium-Durchtrittsöffnung 120 eines Medium-Kanals 122 der elektrochemischen Vorrichtung 100 umgeben, der Bipolarplatte 108 derselben elektrochemischen Einheit 104 überstehen.

Sowohl die Außenkonturen 116 der Bipolarplatten 108 als auch die Innenkonturen 118 der Bipolarplatten 108 bilden somit Konturen 119 der Bipolarplatten 108, über welche die Dichtungen 110 im verpressten Zustand in einer senkrecht zur Stapelrichtung 106 gerichteten Überstandsrichtung 136 seitlich überstehen können.

Grundsätzlich kann vorgesehen sein, dass die Dichtungen 110 jeweils nur über einen Teil ihres Umfangs über die jeweilige Innenkontur 118 der jeweils zugeordneten Bipolarplatte 108 in der Überstandsrichtung 136 überstehen; vorzugsweise ist jedoch vorgesehen, dass die Dichtungen 110 über ihren gesamten Innenumfang hinweg und über den gesamten Umfang der jeweiligen Innenkontur 118 der jeweils zugeordneten Bipolarplatte 108 hinweg in der Überstandsrichtung 136 über die jeweils zugeordnete Bipolarplatte 108 überstehen.

Die Dichtungen 110 liegen ferner mit über die jeweils zugeordnete Bipolarplatte 108 überstehenden Isolationsbereichen 138 an den in der Stapelrichtung 106 darüber und darunter liegenden Dichtungen 110 an, so dass die Innenflächen 140' der Dichtungen 110 zusammen eine geschlossene Innen-Dichtfläche 142' an der Innenseite der elektrochemischen Vorrichtung 100 und am Außenumfang des jeweils zugeordneten Medium-Kanals 122 bilden.

Durch diese geschlossene Innen-Dichtfläche 142' sind die Innenkonturen 118 der Bipolarplatten 108 der elektrochemischen Einheiten 104 vollständig gegenüber dem jeweils zugeordneten Medium-Kanal 122 abgeschirmt, so dass keine leitfähigen Elemente, insbesondere kein Schmutz, keine Fremdpartikel und/oder kein verunreinigtes, beispielsweise nicht deionisiertes, Wasser, die Bipolarplatten 108 von dem Innenraum 144' des jeweils zugeordneten Medium-Kanals 122 her kontaktieren können.

Ein Kurzschluss zwischen zwei in der Stapelrichtung 106 aufeinander folgenden Bipolarplatten 108 aufgrund einer Verunreinigung durch solche elektrisch leitfähigen Elemente aus dem Innenraum 144' eines Medium-Kanals 122 der elektrochemischen Vorrichtung 100 ist dadurch ausgeschlossen.

Wie aus Fig. 4 zu ersehen ist, welche einen ausschnittsweisen Querschnitt durch die elektrochemische Vorrichtung 100 im Bereich einer Außenkontur 116 oder im Bereich einer Innenkontur 118 der Bipolarplatten 108 zeigt, können die Bipolarplatten 108 in dem Bereich, in welchem die Dichtungen 110 abdichtend an den Bipolarplatten 108 anliegen, jeweils eine Sicke 146 aufweisen.

Die Dichtungen 110 weisen jeweils einen oder mehrere Kontaktbereiche 148 auf, mit denen die Dichtungen 110 jeweils an einer benachbarten Bipolarplatte 108 oder an mehreren benachbarten Bipolarplatten 108 anliegen.

Beispielsweise kann jede Dichtung 110 einen ersten Kontaktbereich 150 aufweisen, mit welchem die Dichtung an der Sicke der Bipolarplatte 108 derselben elektrochemischen Einheit 104 anliegt, und einen zweiten Kontaktbereich 152 aufweisen, mit welchem die Dichtung 110 an der Bipolarplatte 108 derselben elektrochemischen Einheit 104 und, an einer dieser Bipolarplatte 108 gegenüberliegenden Dichtfläche, an einer Bipolarplatte 108 einer benachbarten elektrochemischen Einheit 104 anliegt.

An den Kontaktbereich 148 oder an die Kontaktbereiche 148 der Dichtung 110 schließt sich ein Isolationsbereich 138 der Dichtung 110 an, welcher auf der dem Außenraum 144 der elektrochemischen Vorrichtung 100 beziehungsweise dem Innenraum 144' eines Medium-Kanals 122 der elektrochemischen Vorrichtung 100 zugewandten Seite des Kontaktbereichs 148 beziehungsweise der Kontaktbereiche 148 der Dichtungen 110 angeordnet ist.

Auf der dem Isolationsbereich 138 abgewandten Seite des Kontaktbereichs 148 oder der Kontaktbereiche 148 ist jeweils ein Anbindungsbereich 156 der Dichtung 110 angeordnet, über welchen die Dichtung 110 beispielsweise mit der (nicht dargestellten) elektrochemisch aktiven Einheit der jeweiligen elektrochemischen Einheit 104 und/oder mit einer Gasdiffusionslage der elektrochemischen Einheit 104 verbunden sein kann.

Wie aus Fig. 4 zu ersehen ist, welche den unverpressten Zustand der Dichtungen 110, vor dem Verpressen der elektrochemischen Einheiten 104 mittels der Spannvorrichtung 112, darstellt, stehen die Dichtungen 110 mit ihren Isolationsbereichen 138 bei dieser Ausführungsform bereits im unverpressten Zustand der Dichtungen 110 über die Außenkonturen 116 beziehungsweise über die Innenkonturen 118 der Bipolarplatten 108 in der Überstandsrichtung 136 seitlich in den Außenraum 144 beziehungsweise in den Innenraum 144' eines Medium-Kanals 122 der elektrochemischen Vorrichtung 100 über.

Jedoch berühren sich die Isolationsbereiche 138 der Dichtungen 110 in dem in Fig. 4 dargestellten unverpressten Zustand der Dichtungen 110 noch nicht.

In dem in Fig. 3 dargestellten verpressten Zustand der Dichtungen 110, nach dem Verpressen der elektrochemischen Einheiten 104 mittels der Spannvorrichtung 112, kontaktieren sich die Dichtungen 110 jedoch gegenseitig, so dass die geschlossene Außen-Dichtfläche 142 an der Außenseite der elektrochemischen Vorrichtung 100 oder die geschlossene Innen-Dichtfläche 142' an einem Medium-Kanal 122 der elektrochemischen Vorrichtung 100 gebildet wird.

Eine in Fig. 5 dargestellte zweite Ausführungsform einer elektrochemischen Vorrichtung 100 unterscheidet sich von der in den Fig. 1 bis 4 dargestellten ersten Ausführungsform dadurch, dass die Dichtungen 110 nur einen Kontaktbereich 148 aufweisen, welcher an zwei benachbarten Bipolarplatten 108 anliegt, und ein keilförmiger Bereich 158 der Dichtungen 110 auf der dem Isolationsbereich 138 abgewandten Seite des Kontaktbereichs 148 angeordnet ist.

In diesem keilförmigen Bereich 158 vergrößert sich die Dicke der jeweiligen Dichtungen 110, das heißt deren Ausdehnung längs der Stapelrichtung 106, mit abnehmendem Abstand von dem Isolationsbereich 138.

Der keilförmige Bereich 158, der Kontaktbereich 148 und der Isolationsbereich 138 der Dichtungen 110 sind bei dieser Ausführungsform im Wesentlichen symmetrisch zu einer Mittelebene 160 der Dichtungen 110 ausgebildet, welche im assemblierten Zustand der elektrochemischen Vorrichtung 100 auf halber Höhe der jeweiligen Dichtung 110 senkrecht zur Stapelrichtung 106 durch die jeweilige Dichtung 110 verläuft.

Fig. 5 zeigt die Dichtungen 110 im unverpressten Zustand, vor dem Verpressen der elektrochemischen Einheiten 104 mittels der Spannvorrichtung 112.

Aus Fig. 5 ist zu ersehen, dass die Dichtungen 110 bei dieser Ausführungsform bereits im unverpressten Zustand längs der Überstandsrichtung 136 seitlich über die Außenkontur 116 beziehungsweise über die Innenkontur 118 der Bipolarplatten 108 überstehen und dass die Isolationsbereiche 138 sich bereits im unverpressten Zustand der Dichtungen 110 berühren.

Durch die Verpressung der elektrochemischen Einheiten 104 mittels der Spannvorrichtung 112 werden die Kontaktbereiche 148 und die daran angeordneten Isolationsbereiche 138 noch weiter in den Außenraum 144 der elektrochemischen Vorrichtung 100 beziehungsweise in den Innenraum 144' des Medium-Kanals 122 bewegt.

Im Übrigen stimmt die in Fig. 5 dargestellte zweite Ausführungsform einer elektrochemischen Vorrichtung 100 hinsichtlich Aufbau, Funktion und Herstellungsweise mit der in den Fig. 1 bis 4 dargestellten ersten Ausführungsform überein, auf deren vorstehende Beschreibung insoweit Bezug genommen wird.

Eine in Fig. 6 ausschnittsweise dargestellte dritte Ausführungsform einer elektrochemischen Vorrichtung 100 unterscheidet sich von der in Fig. 5 dargestellten zweiten Ausführungsform dadurch, dass die Dichtungen 110 im in Fig. 6 dargestellten unverpressten Zustand der Dichtungen 110, vor dem Verpressen der elektrochemischen Einheiten 104 mittels der Spannvorrichtung 112, noch nicht in der Überstandsrichtung 136 seitlich über die Außenkontur 116 beziehungsweise über die Innenkontur 118 der Bipolarplatten 108 überstehen.

Während des Verpressens der elektrochemischen Einheiten 104 bewegen sich die Dichtungen 110 jedoch in der Überstandsrichtung 136 so weit, dass der Überstand der Dichtungen 110 über die Außenkontur 116 beziehungsweise über die Innenkontur 118 der Bipolarplatten 108 während der Verpressung des Stapels 102 aus elektrochemischen Einheiten 104 erreicht wird.

Im (nicht dargestellten) verpressten Zustand der Dichtungen 110 liegen die Isolationsbereiche 138 von längs der Stapelrichtung 106 aufeinander folgenden Dichtungen 110 aneinander an, so dass auch bei dieser Ausführungsform eine geschlossene Außen-Dichtfläche 142 beziehungsweise eine geschlossene Innen-Dichtfläche 142' gebildet wird.

Ferner sind die Isolationsbereiche 138 der Dichtungen 110 bei dieser Ausführungsform in der Stapelrichtung 106 so dick ausgeführt, dass sie nach der Verpressung der elektrochemischen Einheiten 104 mittels der Spannvorrichtung 112 Kontakt zu beiden der jeweiligen Dichtung 110 benachbarten Bipolarplatten 108 haben.

Im Übrigen stimmt die in Fig. 6 dargestellte dritte Ausführungsform einer elektrochemischen Vorrichtung 100 hinsichtlich Aufbau, Funktion und Herstellungsweise mit der in Fig. 5 dargestellten zweiten Ausführungsform überein, auf deren vorstehende Beschreibung insoweit Bezug genommen wird.

Eine in Fig. 7 ausschnittsweise dargestellte vierte Ausführungsform einer elektrochemischen Vorrichtung 100 unterscheidet sich von der in Fig. 6 dargestellten dritten Ausführungsform dadurch, dass die Dichtungen 110 bei dieser Ausführungsform zwei keilförmige Bereiche 158 und 158' aufweisen, zwischen denen ein Kontaktbereich 148 der jeweiligen Dichtung 110 angeordnet ist, welcher im Wesentlichen symmetrisch zu einer Längsebene 162 der Dichtung 110 ausgebildet ist. Die Längsebene 162 erstreckt sich parallel zu der Außenfläche 140 beziehungsweise 140' der jeweiligen Dichtung 110 und parallel zur Stapelrichtung 106 sowie durch die Kuppen 163 des Kontaktbereichs 148, mit denen der Kontaktbereich 148 an jeweils einer der benachbarten Bipolarplatten 108 anliegt.

In dem zweiten keilförmigen Bereich 158' der Dichtung 110 nimmt die Dicke der Dichtung 110, das heißt deren Ausdehnung längs der Stapelrichtung 106, mit abnehmendem Abstand von dem Isolationsbereich 138 der Dichtung 110 ab.

Der Isolationsbereich 138 der Dichtung 110 ist bei dieser Ausführungsform so gestaltet, dass er nach der Assemblierung des Stapels 102, aber vor der Verpressung der elektrochemischen Einheiten 104 mittels der Spannvorrichtung 112 nicht mit den benachbarten Bipolarplatten 108 in Kontakt steht.

Beim Verpressen der elektrochemischen Einheiten wird der Isolationsbereich 138 aber durch die von der Volumenverdrängung des Kontaktbereichs 148 und der keilförmigen Bereiche 158 und 158' hervorgerufene Bewegung des Isolationsbereichs 138 über die Außenkontur 116 beziehungsweise über die Innenkontur 118 der Bipolarplatten 108 hinaus bewegt.

Im verpressten Zustand der Dichtungen 110 kontaktieren die Isolationsbereiche 138 von in der Stapelrichtung 106 aufeinander folgenden Dichtungen 110 einander, und es wird eine geschlossene Außen-Dichtfläche 142 beziehungsweise eine geschlossene Innen-Dichtfläche 142' gebildet, welche die Bipolarplatten 108 gegenüber dem Außenraum 144 der elektrochemischen Vorrichtung 100 beziehungsweise gegenüber dem Innenraum 144' eines Medium-Kanals 122 der elektrochemischen Vorrichtung 100 abschirmt.

Die Außenkanten der Bipolarplatten 108 sind in diesem Fall vorzugsweise vollständig von dem Dichtungsmaterial der Dichtungen 110 umschlossen.

Im Übrigen stimmt die in Fig. 7 dargestellte vierte Ausführungsform einer elektrochemischen Vorrichtung 100 hinsichtlich Aufbau, Funktion und Herstellungsweise mit der in Fig. 6 dargestellten dritten Ausführungsform überein, auf deren vorstehende Beschreibung insoweit Bezug genommen wird.

Eine in Fig. 8 ausschnittsweise dargestellte fünfte Ausführungsform einer elektrochemischen Vorrichtung 100 unterscheidet sich von der in Fig. 7 dargestellten vierten Ausführungsform dadurch, dass der zweite keilförmige Bereich 158' der Dichtungen 110 entfällt und der Kontaktbereich 148 der Dichtelemente 110 unsymmetrisch bezüglich der durch die Kuppen 163 des Kontaktbereichs 148 verlaufenden Längsebene 162 der Dichtungen 110 ausgebildet ist.

Insbesondere ist der Kontaktbereich 148 so ausgebildet, dass seine dem Isolationsbereich 138 zugewandte Flanke 164 einen kleineren Winkel mit der Stapelrichtung 106 einschließt als seine dem Isolationsbereich 138 abgewandte Flanke 166.

Insbesondere kann vorgesehen sein, dass die dem Isolationsbereich 138 zugewandte Flanke 164 des Kontaktbereichs 148 im Wesentlichen parallel zur Stapelrichtung 106 ausgerichtet ist.

Durch diese unsymmetrische Ausbildung des Kontaktbereichs 148 der Dichtungen 110 wird eine Bewegung des Dichtmaterials aus dem Bereich zwischen den Bipolarplatten 108 heraus in den Außenraum 144 der elektrochemischen Vorrichtung 100 beziehungsweise in den Innenraum 144' des Medium-Kanals 122 beim Verpressen der elektrochemischen Einheiten 104 mittels der Spannvorrichtung 112 begünstigt.

Im Übrigen stimmt die in Fig. 8 dargestellte fünfte Ausführungsform der elektrochemischen Vorrichtung 100 hinsichtlich Aufbau, Funktion und Herstellungsweise mit der in Fig. 7 dargestellten vierten Ausführungsform überein, auf deren vorstehende Beschreibung insoweit Bezug genommen wird.

Eine in Fig. 9 ausschnittsweise dargestellte sechste Ausführungsform einer elektrochemischen Vorrichtung 100 unterscheidet sich von der in Fig. 8 dargestellten fünften Ausführungsform dadurch, dass die Dichtungen 110 keinen zusätzlich zu dem Kontaktbereich 148 vorgesehenen separaten Isolationsbereich 138 aufweisen, welcher auf einer dem Außenraum 144 beziehungsweise dem Innenraum 144' des Medium-Kanals 122 zugewandten Seite des Kontaktbereichs 148 angeordnet ist, sondern stattdessen der Kontaktbereich 148 selbst zugleich auch die Funktion eines Isolationsbereichs 138 übernimmt, mit welchem die Dichtungen 110 im verpressten Zustand der Dichtungen 110, nach dem Verpressen der elektrochemischen Einheiten 104 mittels der Spannvorrichtung 112, aneinander anliegen, um eine geschlossene Außen-Dichtfläche 142 beziehungsweise eine geschlossene Innen-Dichtfläche 142' zu bilden.

Der Kontaktbereich 148 ist so dimensioniert, dass er sich während der Verpressung der elektrochemischen Einheiten 104 längs der Überstandsrichtung 136 ganz oder zumindest teilweise über die Außenkontur 116 beziehungsweise über die Innenkontur 118 der Bipolarplatten 108 hinaus bewegt.

Im in Fig. 9 dargestellten unverpressten Zustand der Dichtungen 110 liegt der Kontaktbereich 148 vollständig an den beiden benachbarten Bipolarplatten 108 an.

Im Übrigen stimmt die in Fig. 9 dargestellte sechste Ausführungsform der elektrochemischen Vorrichtung 100 hinsichtlich Aufbau, Funktion und Herstellungsweise mit der in Fig. 8 dargestellten fünften Ausführungsform überein, auf deren vorstehende Beschreibung insoweit Bezug genommen wird.

Eine in Fig. 10 ausschnittsweise dargestellte siebte Ausführungsform einer elektrochemischen Vorrichtung 100 unterscheidet sich von der in Fig. 9 dargestellten sechsten Ausführungsform dadurch, dass die Dichtungen 110 unsymmetrisch bezüglich der Mittelebene 160 der jeweiligen Dichtung 110 ausgebildet sind, welche auf halber Höhe der jeweiligen Dichtung 110 senkrecht zur Stapelrichtung 106 durch die jeweilige Dichtung 110 verläuft.

Insbesondere kann vorgesehen sein, dass der Kontaktbereich 148, welcher zugleich auch die Funktion eines Isolationsbereichs 138 übernimmt, der keilförmige Bereich 158 und der Anbindungsbereich 156 in, vorzugsweise flächigem, Kontakt mit der Bipolarplatte 108 derselben elektrochemischen Einheit 104 stehen.

Die Dichtungen 110 sind vorzugsweise stoffschlüssig mit der Bipolarplatte 108 der jeweiligen elektrochemischen Einheit 104 verbunden.

Insbesondere kann vorgesehen sein, dass die Dichtungen durch ein Spritzgießverfahren, ein Musterdruckverfahren, insbesondere ein Siebdruckverfahren, oder durch ein Dispenserauftrags-Verfahren *in situ* an der jeweils zugeordneten Bipolarplatte 18 erzeugt sind.

Die Bipolarplatten 108 können jeweils einstückig ausgebildet sein oder mehrere, vorzugsweise zwei oder mehr, Bipolarplatten-Lagen umfassen.

Der Kontaktbereich 148 der Dichtungen 110 ist so gestaltet, dass er sich während der Verpressung der elektrochemischen Einheiten 104 mittels der Spannvorrichtung 112 längs der Überstandsrichtung 136 über die Außenkontur 116 beziehungsweise die Innenkontur 118 der Bipolarplatten 108 hinweg in den Außenraum 144 der elektrochemischen Vorrichtung 100 beziehungsweise in den Innenraum 144' des Medium-Kanals 122 hinein bewegt.

Im Übrigen stimmt die in Fig. 10 dargestellte siebte Ausführungsform der elektrochemischen Vorrichtung 100 hinsichtlich Aufbau, Funktion und Herstellungsweise mit der in Fig. 9 dargestellten sechsten Ausführungsform überein, auf deren vorstehende Beschreibung insoweit Bezug genommen wird.

Die vorstehend beschriebenen Dichtungen 110 können jeweils an eine Bipolarplatte 108 oder an mehrere Bipolarplatten 108, an eine Gasdiffusionslage oder an mehrere Gasdiffusionslagen, an einen Teil einer elektrochemisch aktiven Einheit, insbesondere einer Membran-Elektroden-Anordnung, und/oder an ein anderes Trägerelement angebunden sein.

Die Dichtungen 110 sind aus einem Elastomermaterial gebildet.

Die Bipolarplatten 108 sind vorzugsweise aus einem metallischen Material gebildet.

Die Bipolarplatten 108 können jeweils einstückig ausgebildet sein und nur eine einzelne Bipolarplatten-Lage umfassen oder aber mehrere, insbesondere zwei oder mehr, Bipolarplatten-Lagen umfassen.

## Patentansprüche

1. Elektrochemische Vorrichtung, umfassend mehrere elektrochemische Einheiten (104), welche längs einer Stapelrichtung (106) aufeinander folgen,
wobei jede elektrochemische Einheit (104) eine Bipolarplatte (108) und eine elektrisch isolierende Dichtung (110) umfasst, und
eine Spannvorrichtung (112) zum Verpressen der elektrochemischen Einheiten (104) längs der Stapelrichtung (106),
wobei mindestens eine Dichtung (110) mindestens einer elektrochemischen Einheit (104) im verpressten Zustand in einer senkrecht zur Stapelrichtung (106) gerichteten Überstandsrichtung (136) seitlich über eine Kontur (119) der Bipolarplatte (108) der elektrochemischen Einheit (104) übersteht und
wobei mindestens eine Außenkontur (116) mindestens einer Bipolarplatte (108) durch mindestens eine der Bipolarplatte (108) benachbarte Dichtung (110) gegenüber einem Außenraum (144) der elektrochemischen Vorrichtung (100) abgeschirmt ist,
**dadurch gekennzeichnet,**
**dass** die mindestens eine Dichtung (110) aus einem Elastomermaterial gebildet ist und
**dass** die Dichtung (110) im unverpressten Zustand und/oder im verpressten Zustand mit mindestens einem Kontaktbereich (148) an zwei einander benachbarten Bipolarplatten (108) der elektrochemischen Vorrichtung (100) anliegt.

2. Elektrochemische Vorrichtung nach Anspruch 1, **dadurch gekennzeichnet, dass** mindestens eine Dichtung (110) mindestens einer elektrochemischen Einheit (104) im verpressten Zustand über eine Außenkontur (116) der Bipolarplatte (108) der elektrochemischen Einheit (104) in einen Außenraum (144) der elektrochemischen Vorrichtung (100) übersteht.

3. Elektrochemische Vorrichtung nach einem der Ansprüche 1 oder 2, **dadurch gekennzeichnet, dass** mindestens eine Dichtung (110) mindestens einer elektrochemischen Einheit (104) im verpressten Zustand über eine Innenkontur (118) der Bipolarplatte (108) der elektrochemischen Einheit (104) in einen Medium-Kanal (122) der elektrochemischen Vorrichtung (100) übersteht.

4. Elektrochemische Vorrichtung nach einem der Ansprüche 1 bis 3, **dadurch gekennzeichnet, dass** mindestens eine Dichtung (110) mindestens einer elektrochemischen Einheit (104) im verpressten Zustand an einer Dichtung (110) einer benachbarten elektrochemischen Einheit (104) anliegt.

5. Elektrochemische Vorrichtung nach einem der Ansprüche 1 bis 4, **dadurch gekennzeichnet, dass** mindestens eine Innenkontur (118) mindestens einer Bipolarplatte (108) durch mindestens eine der Bipolarplatte (108) benachbarte Dichtung (110) gegenüber einem Medium-Kanal (122) der elektrochemischen Vorrichtung (100) abgeschirmt ist.

6. Elektrochemische Vorrichtung nach einem der Ansprüche 1 bis 5, **dadurch gekennzeichnet, dass** die Dichtung (110) im unverpressten Zustand nicht in einer senkrecht zur Stapelrichtung (106) gerichteten Überstandsrichtung (136) seitlich über die Kontur (119) der Bipolarplatte (108) übersteht.

7. Elektrochemische Vorrichtung nach einem der Ansprüche 1 bis 6, **dadurch gekennzeichnet, dass** der Kontaktbereich (148) im unverpressten Zustand bezüglich einer Längsebene (162) der Dichtung (110), welche parallel zur Stapelrichtung (106) und parallel zu einer Längsrichtung der Dichtung (110) durch eine Kuppe (163) des Kontaktbereichs (148) verläuft, unsymmetrisch ausgebildet ist.

8. Elektrochemische Vorrichtung nach einem der Ansprüche 1 bis 7, **dadurch gekennzeichnet, dass** die Dichtung (110) einen Isolationsbereich (138) umfasst, welcher im verpressten Zustand an einem Isolationsbereich (138) einer weiteren Dichtung (110) der elektrochemischen Vorrichtung (100) anliegt.

9. Elektrochemische Vorrichtung nach einem der Ansprüche 1 bis 8, **dadurch gekennzeichnet, dass** die Dichtung (110) mindestens einen keilförmigen Bereich (158, 158') aufweist.

10. Elektrochemische Vorrichtung nach einem der Ansprüche 1 bis 9, **dadurch gekennzeichnet, dass** die Außenflächen (140) der Dichtungen (110) der elektrochemischen Vorrichtung (100) im verpressten Zustand eine geschlossene Außen-Dichtfläche (142) an einer Außenseite der elektrochemischen Vorrichtung (100) bilden.

11. Elektrochemische Vorrichtung nach einem der Ansprüche 1 bis 10, **dadurch gekennzeichnet, dass** die Innenflächen (140') der Dichtungen (110) der elektrochemischen Vorrichtung (100) im verpressten Zustand eine geschlossene Innen-Dichtfläche (142') an einer an einem Medium-Kanal (122) der elektrochemischen Vorrichtung (100) angrenzenden Innenseite der elektrochemischen Vorrichtung (100) bilden.

12. Verfahren zur Herstellung einer elektrochemischen Vorrichtung (100), umfassend Folgendes:
- Bildung eines Stapels (102), welcher mehrere längs einer Stapelrichtung (106) aufeinanderfolgende elektrochemische Einheiten (104) umfasst, wobei jede elektrochemische Einheit (104) eine Bipolarplatte (108) und eine elektrisch isolierende Dichtung (110) umfasst; und
- Verspannen des Stapels (102) aus elektrochemischen Einheiten (104) mittels einer Spannvorrichtung (112);
wobei mindestens eine Dichtung (110) mindestens einer elektrochemischen Einheit (104) im verpressten Zustand in einer senkrecht zur Stapelrichtung (106) gerichteten Überstandsrichtung (136) seitlich über eine Kontur (119) der Bipolarplatte (108) der elektrochemischen Einheit (104) übersteht und
wobei mindestens eine Außenkontur (116) mindestens einer Bipolarplatte (108) durch mindestens eine der Bipolarplatte (108) benachbarte Dichtung (110) gegenüber einem Außenraum (144) der elektrochemischen Vorrichtung (100) abgeschirmt ist,
**dadurch gekennzeichnet,**
**dass** die mindestens eine Dichtung (110) aus einem Elastomermaterial gebildet ist und
**dass** die Dichtung (110) im unverpressten Zustand und/oder im verpressten Zustand mit mindestens einem Kontaktbereich (148) an zwei einander benachbarten Bipolarplatten (108) der elektrochemischen Vorrichtung (100) anliegt.

13. Verfahren nach Anspruch 12, **dadurch gekennzeichnet, dass** mindestens eine Dichtung (110) mindestens einer elektrochemischen Einheit (104) im unverpressten Zustand nicht in einer senkrecht zur Stapelrichtung (106) gerichteten Überstandsrichtung (136) seitlich über die Kontur (119) der Bipolarplatte (108) übersteht.

## Claims

1. Electrochemical device, comprising a plurality of electrochemical units (104), which succeed one another along a stack direction (106),
wherein each electrochemical unit (104) comprises a bipolar plate (108) and an electrically insulating seal (110), and
a clamping device (112) for pressing together the electrochemical units (104) along the stack direction (106),
wherein at least one seal (110) of at least one electrochemical unit (104), in the pressed state, protrudes laterally beyond a contour (119) of the bipolar plate (108) of the electrochemical unit (104) in a direction of protrusion (136) directed perpendicularly to the stack direction (106), and
wherein at least one outer contour (116) of at least one bipolar plate (108) is shielded from an outside space (144) of the electrochemical device (100) by at least one seal (110) adjacent to the bipolar plate (108),
**characterized in that**
the at least one seal (110) is made of an elastomer material, and
**in that** the seal (110), in the unpressed state and/or in the pressed state, abuts with at least one contact region (148) against two adjacent bipolar plates (108) of the electrochemical device (100).

2. Electrochemical device in accordance with Claim 1, **characterized in that** at least one seal (110) of at least one electrochemical unit (104), in the pressed state, protrudes beyond an outer contour (116) of the bipolar plate (108) of the electrochemical unit (104) into an outside space (144) of the electrochemical device (100).

3. Electrochemical device in accordance with either of Claims 1 or 2, **characterized in that** at least one seal (110) of at least one electrochemical unit (104), in the pressed state, protrudes beyond an inner contour (118) of the bipolar plate (108) of the electrochemical unit (104) into a medium channel (122) of the electrochemical device (100).

4. Electrochemical device in accordance with any one of Claims 1 to 3, **characterized in that** at least one seal (110) of at least one electrochemical unit (104), in the pressed state, abuts against a seal (110) of an adjacent electrochemical unit (104).

5. Electrochemical device in accordance with any one of Claims 1 to 4, **characterized in that** at least one inner contour (118) of at least one bipolar plate (108) is shielded from a medium channel (122) of the electrochemical device (100) by at least one seal (110) adjacent to the bipolar plate (108).

6. Electrochemical device in accordance with any one of Claims 1 to 5, **characterized in that** the seal (110), in the unpressed state, does not protrude laterally beyond the contour (119) of the bipolar plate (108) in a direction of protrusion (136) directed perpendicularly to the stack direction (106).

7. Electrochemical device in accordance with any one of Claims 1 to 6, **characterized in that** the contact region (148), in the unpressed state, is of asymmetrical configuration in relation to a longitudinal plane (162) of the seal (110), which extends in parallel to the stack direction (106) and in parallel to a longitudinal direction of the seal (110) through a crest (163) of the contact region (148).

8. Electrochemical device in accordance with any one of Claims 1 to 7, **characterized in that** the seal (110) comprises an insulating region (138), which, in the pressed state, abuts against an insulating region (138) of a further seal (110) of the electrochemical device (100).

9. Electrochemical device in accordance with any one of Claims 1 to 8, **characterized in that** the seal (110) has at least one wedge-shaped region (158, 158').

10. Electrochemical device in accordance with any one of Claims 1 to 9, **characterized in that** the outer faces (140) of the seals (110) of the electrochemical device (100), in the pressed state, form a closed outer sealing face (142) on an outer side of the electrochemical device (100).

11. Electrochemical device in accordance with any one of Claims 1 to 10, **characterized in that** the inner faces (140') of the seals (110) of the electrochemical device (100), in the pressed state, form a closed inner sealing face (142') on an inner side of the electrochemical device (100) adjoining a medium channel (122) of the electrochemical device (100).

12. Method for producing an electrochemical device (100), comprising the following:
- forming a stack (102), which comprises a plurality of electrochemical units (104) succeeding one another along a stack direction (106), wherein each electrochemical unit (104) comprises a bipolar plate (108) and an electrically insulating seal (110); and
- clamping the stack (102) of electrochemical units (104) by means of a clamping device (112);
wherein at least one seal (110) of at least one electrochemical unit (104), in the pressed state, protrudes laterally beyond a contour (119) of the bipolar plate (108) of the electrochemical unit (104) in a direction of protrusion (136) directed perpendicularly to the stack direction (106), and
wherein at least one outer contour (116) of at least one bipolar plate (108) is shielded from an outside space (144) of the electrochemical device (100) by at least one seal (110) adjacent to the bipolar plate (108),
**characterized in that**
the at least one seal (110) is made of an elastomer material, and
**in that** the seal (110), in the unpressed state and/or in the pressed state, abuts with at least one contact region (148) against two adjacent bipolar plates (108) of the electrochemical device (100).

13. Method in accordance with Claim 12, **characterized in that** at least one seal (110) of at least one electrochemical unit (104), in the unpressed state, does not protrude laterally beyond the contour (119) of the bipolar plate (108) in a direction of protrusion (136) directed perpendicularly to the stack direction (106).

## Revendications

1. Dispositif électrochimique comprenant plusieurs unités électrochimiques (104) qui se suivent les unes les autres le long d'une direction d'empilement (106),
dans lequel chaque unité électrochimique (104) comprend une plaque bipolaire (108) et un joint d'étanchéité (110) électriquement isolant, et
un dispositif de serrage (112) pour comprimer les unités électrochimiques (104) le long de la direction d'empilement (106),
dans lequel au moins un joint d'étanchéité (110) d'au moins une unité électrochimique (104) dépasse, dans l'état comprimé, latéralement d'un contour (119) de la plaque bipolaire (108) de l'unité électrochimique (104) dans une direction de débord (136) orientée perpendiculairement à la direction d'empilement (106) et
dans lequel au moins un contour extérieur (116) d'au moins une plaque bipolaire (108) est protégé par au moins un joint d'étanchéité (110) adjacent à la plaque bipolaire (108) par rapport à un espace extérieur (144) du dispositif électrochimique (100),
**caractérisé en ce**
**que** l'au moins un joint d'étanchéité (110) est formé à partir d'un matériau élastomère et
**que** le joint d'étanchéité (110) repose dans l'état non comprimé et/ou dans l'état comprimé par au moins une zone de contact (148) sur deux plaques bipolaires (108) adjacentes l'une à l'autre du dispositif électrochimique (100).

2. Dispositif électrochimique selon la revendication 1, **caractérisé en ce qu'**au moins un joint d'étanchéité (110) d'au moins une unité électrochimique (104) dépasse, dans l'état comprimé, d'un contour extérieur (116) de la plaque bipolaire (108) de l'unité électrochimique (104) dans un espace extérieur (144) du dispositif électrochimique (100).

3. Dispositif électrochimique selon l'une quelconque des revendications 1 ou 2, **caractérisé en ce qu'**au moins un joint d'étanchéité (110) d'au moins une unité électrochimique (104) dépasse, dans l'état comprimé, d'un contour intérieur (118) de la plaque bipolaire (108) de l'unité électrochimique (104) dans un canal de milieu (122) du dispositif électrochimique (100).

4. Dispositif électrochimique selon l'une quelconque des revendications 1 à 3, **caractérisé en ce qu'**au moins un joint d'étanchéité (110) d'au moins une unité électrochimique (104) repose dans l'état comprimé sur un joint d'étanchéité (110) d'une unité électrochimique (104) adjacente.

5. Dispositif électrochimique selon l'une quelconque des revendications 1 à 4, **caractérisé en ce qu'**au moins un contour intérieur (118) d'au moins une plaque bipolaire (108) est protégé par au moins un joint d'étanchéité (110) adjacent à la plaque bipolaire (108) par rapport à un canal de milieu (122) du dispositif électrochimique (100).

6. Dispositif électrochimique selon l'une quelconque des revendications 1 à 5, **caractérisé en ce que** le joint d'étanchéité (110) ne dépasse pas, dans l'état non comprimé, latéralement du contour (119) de la plaque bipolaire (108) dans une direction de débord (136) orientée perpendiculairement à la direction d'empilement (106).

7. Dispositif électrochimique selon l'une quelconque des revendications 1 à 6, **caractérisé en ce que** la zone de contact (148) est réalisée de manière non symétrique dans l'état non comprimé par rapport à un plan longitudinal (162) du joint d'étanchéité (110),
qui s'étend parallèlement à la direction d'empilement (106) et parallèlement à une direction longitudinale du joint d'étanchéité (110) à travers un sommet (163) de la zone de contact (148).

8. Dispositif électrochimique selon l'une quelconque des revendications 1 à 7, **caractérisé en ce que** le joint d'étanchéité (110) comprend une zone d'isolation (138) qui, dans l'état comprimé, repose sur une zone d'isolation (138) d'un autre joint d'étanchéité (110) du dispositif électrochimique (100).

9. Dispositif électrochimique selon l'une quelconque des revendications 1 à 8, **caractérisé en ce que** le joint d'étanchéité (110) présente au moins une zone (158, 158') en forme de coin.

10. Dispositif électrochimique selon l'une quelconque des revendications 1 à 9, **caractérisé en ce que** les surfaces extérieures (140) des joints d'étanchéité (110) du dispositif électrochimique (100) forment, dans l'état comprimé, une surface extérieure d'étanchéité (142) fermée sur une face extérieure du dispositif électrochimique (100).

11. Dispositif électrochimique selon l'une quelconque des revendications 1 à 10, **caractérisé en ce que** les surfaces intérieures (140') des joints d'étanchéité (110) du dispositif électrochimique (100) forment, dans l'état comprimé, une surface intérieure d'étanchéité fermée (142') sur une face intérieure du dispositif électrochimique (100) adjacente à un canal de milieu (122) du dispositif électrochimique (100).

12. Procédé de fabrication d'un dispositif électrochimique (100), comprenant ce qui suit :
- la formation d'une pile (102), qui comprend plusieurs unités électrochimiques (104) se suivant les unes les autres le long d'une direction d'empilement (106), dans lequel chaque unité électrochimique (104) comprend une plaque bipolaire (108) et un joint d'étanchéité (110) électriquement isolant ; et
- l'assemblage par serrage de la pile (102) composée d'unités électrochimiques (104) au moyen d'un dispositif de serrage (112) ;
dans lequel au moins un joint d'étanchéité (110) d'au moins une unité électrochimique (104) dépasse, dans l'état comprimé, latéralement d'un contour (119) de la plaque bipolaire (108) de l'unité électrochimique (104) dans une direction de débord (136) orientée perpendiculairement à la direction d'empilement (106) et
dans lequel au moins un contour extérieur (116) d'au moins une plaque bipolaire (108) est protégé par au moins un joint d'étanchéité (110) adjacent à la plaque bipolaire (108) par rapport à un espace extérieur (144) du dispositif électrochimique (100),
**caractérisé en ce**
**que** l'au moins un joint d'étanchéité (110) est formé à partir d'un matériau élastomère et
**que** le joint d'étanchéité (110) repose dans l'état non comprimé et/ou dans l'état comprimé par au moins une zone de contact (148) sur deux plaques bipolaires (108) adjacentes l'une à l'autre du dispositif électrochimique (100).

13. Procédé selon la revendication 12, **caractérisé en ce qu'**au moins un joint d'étanchéité (110) d'au moins une unité électrochimique (104) ne dépasse pas, dans l'état non comprimé, latéralement du contour (119) de la plaque bipolaire (108) dans une direction de débord (136) orientée perpendiculairement à la direction d'empilement (106).
